# EUROPEAN PATENT APPLICATION

(11) **EP 0 769 249 A2**
(43) Date of publication of application: **23.04.1997**
(21) Application number: 96203493.0
(22) Date of filing: 17.11.1993
(51) Int. Cl.: A22C 29/02

(54) **A device and a method for processing crustaceans**

(30) Priority: 18.12.1992 NL 9202198
(62) Divisional of application: 94903852.5
(71) Applicant: MEGAPEL B.V., NL-2014 AE Haarlem (NL)
(72) Inventor: De Vries, Jacobus Lambertus, 2014 AE Haarlem (NL)
(74) Representative: Louet Feisser, Arnold

(57) **Abstract**

A device for processing crustaceans, provided with sorting means (3) for removing shell parts and impurities from the peeled crustaceans. Sorting means (3) are provided with vibrating screen decks (10) comprising bars (46) lying side by side, which extend substantially in the direction of movement of the crustaceans with their free ends. Said bars (46) extend slightly obliquely towards the outside from the centre of said screen deck (10). Stop means (47) are provided between two bars (46), near their point of attachment.

## Description

The invention relates to a device and a method for processing crustaceans, such as shrimps. The peeling of crustaceans cannot easily be done in such a manner that one the one hand the flesh intended for consumption and on the other hand shell parts and other impurities can be discharged fully separated from each other. Generally the flesh of the crustaceans intended for consumption will also contain remnants of shell parts and other impurities.

A conventional method for removing the impurities from the flesh of the crustaceans intended for consumption, such as shrimps, is to spread the crustaceans on a so-called picking table, which is preferably provided with a conveyor belt, whereupon the impurities in question are removed by hand. This method is problematic, both from a hygienic point of view and for reasons of cost efficiency.

The object of the invention is to provide a device and a method by means of which remnants of shell parts and other impurities can be removed from peeled crustaceans, such as shrimps, in an efficient and reliable manner.

According to the invention sorting means are present for removing shell parts and impurities from the peeled crustaceans, which sorting means are provided with vibrating screen decks comprising bars lying side by side, which extend substantially in the direction of movement of the crustaceans with their free ends.

Further aspects of the invention are mentioned in the claims, illustrated in the drawing and/or explained in more detail in the description of the Figures.

The invention also relates to a method for processing crustaceans, such as shrimps, wherein peeled crustaceans are guided to screen decks comprising bars lying side by side with free ends substantially in the direction in which the crustaceans are moved by vibrating the screen decks.

By way of illustration the invention will be described hereafter with reference to an embodiment of the device for processing crustaceans shown in the drawing.
Figure 1 is a plan view of the device;
Figure 2 is a side view of the device;
Figure 3 is a partial front view of a screen deck according to the arrow VI in Figure 4; and
Figure 4 is a sectional view of a screen deck along the line VII-VII in Figure 3.

The Figures are only diagrammatic illustrations of the embodiment.

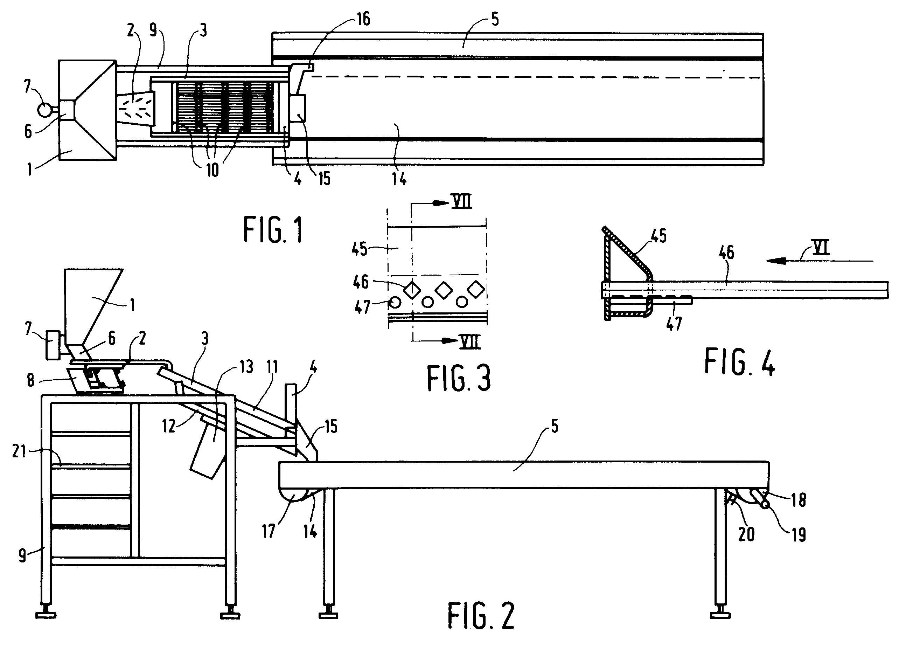

Figures 1 and 2 show a feed hopper 1, a batching chute 2, a sorting device 3, a blowing device 4, and a picking device 5. The feed hopper 1 is a downwardly tapering container having an outlet opening 6 for depositing peeled shrimps on the batching chute 2. The feed hopper 1 is provided with an imbalance motor 7 for vibrating the feed hopper 1. The batching chute 2 is connected to a frame 9 by means of a vibrating mechanism 8. Said vibrating mechanism 8 is adjustable, so that it is possible to adjust the amount of peeled shrimps carried to the sorting device 3.

The sorting device 3 is provided with a number of screen decks 10, both between the upper longitudinal girders 11 and between the lower longitudinal girders 12. Figure 1 shows only the four upper screen decks 10. The screen decks 10 will be described in more detail hereafter with reference to Figures 3 and 4.

The blowing device 4 is secured to the frame 11, 12 of the sorting device 3. The frame 11, 12 of the sorting device 3 is spring-connected to the frame 9 and is provided with a vibrating motor 13, which can vibrate both the sorting device 3 and the blowing device 4.

The shrimps from the feed hopper 1, which have been processed via the batching chute 2, the sorting device 3 and the blowing device 4, land on a picking device 5, which consists of a table, above which a conveyor belt extends. The sorting device 3 and the blowing device 4 remove shell parts and other impurities from the flow of peeled shrimps, whereby the peeled shrimps, via the discharge means 15, and the impurities, via the discharge means 16, land on the conveyor belt 14. The conveyor belt 14 is passed over a starting pulley 17 and an end pulley 18. Near said end pulley 18 the peeled shrimps can be caught separated from the impurities removed therefrom. A scrape-off means 19 is provided near the end pulley 18 to keep shrimps from sticking to the conveyor belt 14. Furthermore a dirt scraper 20 is provided, which functions to keep the conveyor belt clean. The picking device 5 enables a visual inspection of the peeled shrimps.

The frame 9 is provided with a plurality of supports 21, in which storage bins may be placed, if desired.

Figures 3 and 4 show details of a screen deck 10 as present in the sorting device 3. Each screen deck 10 consists of a tubular beam 45 provided transversely to the direction of displacement of the shrimps, four of said beams being provided between the upper longitudinal girders 11 as well as between the lower longitudinal girders 12 (see Figure 2). A plurality of bars 46 are mounted inside the tubular beam 45, said bars having a square cross-section.

Furthermore a plurality of small bars 47 having a circular cross-section are provided inside the tubular beam 45. As is apparent from Figure 4, the small bars 47 are considerably shorter than the bars 46. Said bars and small bars extend entirely through the tubular beam 45, so that they can secured to the tubular beam 45 in two places. As a result of this an optimum fastening strength is achieved.

The screen deck operates as follows. The shrimps move across the screen deck from the left to the right (Figure 4), whereby large parts remain supported on the bars 46, because they are too large to fall through these two bars. The smaller parts of the flow of shrimps fall through the bars 46, so that a separation in the flow of shrimps is obtained.

The shrimps on the screen decks are driven along as a result of the screen decks being vibrated by means of a vibrating motor 13. The vibration thus produced is directed obliquely upwards towards the right in Figure 4, so that the larger parts present on the bars 46 are moved towards the right. It may occur thereby that certain parts land between two bars 46 in such a manner, that they can neither move upwards nor downwards. These parts will not be moved by the vibrating force any more. In order to keep the screen decks from becoming clogged by these parts, stop means in the shape of small bars 47 are provided, which ensure that said clogging cannot take place on the front part of the screen deck. As a result of this the shrimps present on the front part of the screen deck will constantly push along any parts clogging the screen deck.

Preferably the bars 46 extend slightly obliquely towards the outside from their point of attachment in the tubular beam 45.

The screen decks are arranged and dimensioned in such a manner that the shrimps fall through the upper screen decks but not through the lower screen decks. Consequently they are supplied to the blowing device by the lower screen decks.

Preferably the screen decks 10 are arranged in such a manner, that the bars 46 slope slightly upwards with their free ends.

According to the invention the vibrating motor 13 (Figure 2) may be of the type provided with a magneto which intermittently attracts a piece of metal, which piece of metal is removed from the magneto again by spring means. Contrary to what is suggested in Figure 2 the angle with the horizontal at which the vibration is carried out may be less than 45°, whereby the sorting device 3 is moved towards the left (seen in Figure 2) by energizing the magneto, whilst the movement towards the right is effected under the influence of the spring means.

It will be apparent that the blowing device according to the invention may also be used in conjunction with a peeling machine for crustaceans, whereby the blowing device is used for one of the final operations following peeling.

## Claims

1. A device for processing crustaceans, provided with sorting means (3) for removing shell parts and impurities from the peeled crustaceans, characterized in that said sorting means (3) are provided with vibrating screen decks (10) comprising bars (46) lying side by side, which extend substantially in the direction of movement of the crustaceans with their free ends.

2. A device according to claim 1, characterized in that said bars (46) extend slightly obliquely towards the outside from the centre of said screen deck (10).

3. A device according to any one of the preceding claims, characterized in that a stop means (47) is provided between two bars (46), near their point of attachment.

4. A device according to any one of the preceding claims, characterized in that said stop means consists of a short small bar (47), which extends substantially parallel to said bars (46).

5. A device according to any one of the preceding claims, characterized in that a row of upper screen decks (10) and a row of lower screen decks (10) are provided, whereby the bars (46) of the upper screen decks (10) are spaced apart further than the bars (46) of the lower screen decks (10).

6. A device according to any one of the preceding claims, characterized in that a blowing device (4) for removing shell parts and other impurities from the peeled crustaceans is fixedly connected to said sorting means (3), which are together connected to a vibrating motor (13).

7. A device according to any one of the preceding claims, characterized in that said screen decks (10) are arranged in such a manner, that the bars (46) extend slightly upwards at their free ends.

8. A device according to any one of the preceding claims, characterized in that the vibrating motor (13) for driving said sorting device (3) is provided with a magneto, which can be energized intermittently, thereby attracting a piece of metal, which piece of metal is moved back again, away from said magneto, by spring means, whereby said spring means provide the movement in the direction of displacement.

9. A method for processing crustaceans, such as shrimps, wherein peeled crustaceans are guided to screen decks (10) comprising bars (46) lying side by side with free ends substantially in the direction in which the crustaceans are moved by vibrating the screen decks (10).
